# EUROPEAN PATENT SPECIFICATION

(11) **EP 1 967 765 B1**
(45) Date of publication and mention of the grant of the patent: **12.02.2014**
(21) Application number: 06834390.4
(22) Date of filing: 11.12.2006
(51) Int. Cl.: F16H 55/48, C08L 61/06

(54) **RESINOUS PULLEY AND RESIN COMPOSITION**
HARZRIEMENSCHEIBE UND HARZZUSAMMENSETZUNG
POULIE EN RÉSINE ET COMPOSITION DE RÉSINE

(30) Priority: 28.12.2005 JP 2005379603
(43) Date of publication of application: 10.09.2008
(73) Proprietor: JTEKT Corporation, Osaka-shi Osaka 542-8502 (JP); Hitachi Chemical Company, Ltd., Tokyo 100-6606 (JP)
(72) Inventor: TSUDA, Takeshi, Osaka-shi Osaka 542-8502 (JP); ARAI, Hirokazu, Osaka-shi Osaka 542-8502 (JP); ODA, Hiroto, Chikusei-shi Ibaraki 308-8521 (JP)
(74) Representative: Steil, Christian
(86) International application number: PCT/JP2006/324635
(87) International publication number: WO 2007/074626

(56) References cited:
- JP-A- 2002 201 335
- JP-A- 2003 268 197
- JP-A- 2005 247 908

## Description

### Technical Field

The present invention relates to a resin pulley used for engine parts for automobiles and the like and a resin composition used for forming the resin pulley.

### Background of the Art

With pulleys used for component parts for automotive engines and the like, replacement from conventional metal pulleys to resin pulleys reinforced by inorganic fibers such as a glass fiber has been studied with recent demands for size reduction, weight reduction and cost reduction. A phenolic resin is often employed as a base resin constituting the resin pulleys in view of dimensional stability, strength and the like of the resin pulleys. Phenolic resin pulleys reinforced by inorganic fibers such as a glass fiber have come to have sufficient properties as alternatives of metal pulleys in terms of dimensional stability, strength and the like.

However, as the content ratio of the inorganic fibers is increased to further improve dimensional stability, strength and the like of the resin pulleys reinforced by the inorganic fibers, the inorganic fibers become dropping-off factors owing, in particular, to the shape of the resin pulleys and types of belts engaged therewith. As a result, a problem is caused on the contrary that resistance to abrasion is reduced. Abrasion formation of the resin pulleys greatly changes, in particular, in a dusty atmosphere such as when driving on unpaved roads, and the resin pulleys are easily worn out by dust kicked up. Therefore, the resin pulleys may not yet be sufficient as alternatives of metal pulleys. There is also a problem that belt attacking property of damaging a counterpart of the resin pulleys such as a belt becomes strong as the content ratio of the inorganic fibers is increased.

Therefore, various attempts have been made to put into practical use a resin pulley with more superior properties as an alternative product of a metal pulley. For example, Patent Document 1 discloses formation of a resin pulley in which thermal shock resistance is superior, cracks by sudden temperature changes (thermal shock) are not generated, as well as abrasion resistance is superior by employing a resin composition containing a phenolic resin as a base resin, 25 to 45 mass % of an inorganic fiber, 3 to 7 mass % of an inorganic powder, 3 to 7 mass % of an organic fiber and 3 to 10 mass % of an elastomer.

Patent Document 2 discloses formation of a resin pulley in which thermal resistance is superior, blisters or shell cracks are not generated even at 250°C or higher, as well as resistance to abrasion and thermal shock are superior by employing a resin composition containing 35 to 45 mass % of a resol-type phenolic resin out of phenolic resins, 35 to 45 mass % of a glass fiber, 5 to 15 mass % of one kind or two or more kinds of an inorganic powder selected from a calcium carbonate, a clay and a wollastonite and 1 to 3 mass % of a polyvinyl butyral.

Further, Patent Document 3 discloses formation of a resin pulley in which mechanical strength is superior, welding strength and thermal shock resistance are superior by employing a resin composition containing 15 to 34 mass % of a resol-type phenolic resin, 46 to 75 mass % of a glass fiber and 4 to 10 mass % of a polyvinyl acetal as an organic compound.
- Patent Document 1: Japanese Unexamined Patent Publication No. 09-217818 A (Claims 1 and 2, Paragraphs [0006] to [0008] and [0010])
- Patent Document 2: Japanese Unexamined Patent Publication No. 2002-146158 A (Claims 1 and 2, Paragraphs [0014] to [0022])
- Patent Document 3: Japanese Unexamined Patent Publication No. 2003-184998 A (Claim 1, Paragraphs [0006] and [0008] to [0010]).

JP 2005-247908 discloses a phenol resin molding material comprising 100 parts by weight of a resol type phenol resin, 40 to 100 parts by weight of an inorganic fiber, 30 to 90 parts by weight of a natural silica powder having an average particle size of 0.5 to 15 µm and subjected to a coupling agent treatment and 1 to 15 parts by weight of a rubber component as main components. A molding material according to this document can contain 50 % by weight or more of a glass fiber and a natural silica powder of a crushed shape can be used as the natural silica powder.

JP 2002-201335 discloses a phenolic molding composition containing 40 to 100 parts by weight of inorganic fiber, 30 to 90 parts by weight of natural silica powder with a mean particle size of from 20 to 150 µm and 1 to 15 parts by weight of a rubber component as main components in 100 parts by weight of a phenol-based phenolic resin.

JP 2003-268197 discloses a phenolic resin molding composition comprising a resol type phenolic resin, a glass fiber, silica powder and a lubricant inorganic material. Preferably the disclosed composition comprises 25-45 wt.% of the resol type phenolic resin, 35-60 wt.% of the glass fiber, 3-15 wt.% of the silica powder and 2-15 wt.% of the lubricant inorganic material of graphite or calcium fluoride.

### Disclosure of the Invention

### Problems to be Solved by the Invention

A principal object of the inventions described in the aforesaid Patent Documents is to reduce the content ratio of the inorganic fiber by containing in the resin composition including the phenolic resin as a base resin, an elastomer or polyvinyl acetals such as a polyvinyl butyral which has functions of increasing flexibility and toughness of the phenolic resin to increase thermal shock resistance of the resin pulley, and an inorganic powder with a function of maintaining dimensional stability of the resin pulley, thereby to prevent a decrease in abrasion resistance due to the dropping-off factors of an excessive inorganic fiber and suppress belt attacking property.

It can be said that the object is half-achieved. However, when the resin pulleys disclosed in the foregoing Patent Documents are used as pulleys for engine parts for automobiles and the like to which severe thermal shocks are repeatedly applied, there is a problem that thermal shock resistance cannot be maintained and cracks and the like are generated. Therefore, an object of the present invention is to provide a resin pulley which is superior, in particular, in abrasion resistance in a dusty atmosphere and the like and superior in thermal shock resistance and also has suppressed belt attacking property, and a resin composition for forming the resin pulley.

### Means for Solving the Problems

A resin pulley of the present invention is characterized by being formed by a resin composition comprising 35 to 55 mass % of a phenolic resin as a base resin, 1 mass % or more of an acrylonitrile butadiene rubber, 10 to 25 mass % of an inorganic fiber and 3 to 15 mass % of an inorganic powder, the resin composition further comprising a polyester acrylate, wherein the polyester acrylate is at least one kind selected from a group of compounds represented by formulas (1) and (2): 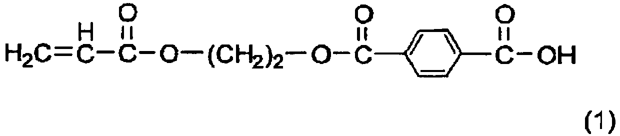 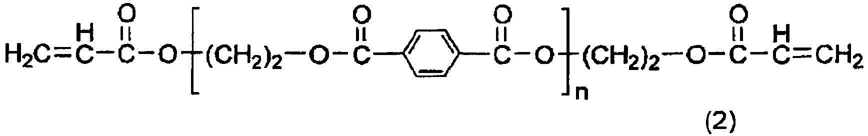 where n is 1 to 10.

According to the present invention, thermal shock resistance of the resin pulley formed of the above resin composition can be improved, further, since
(a) the resin composition includes the acrylnitrile butadiene rubber (hereinafter sometimes referred to as "NBR") having a function of increasing thermal shock resistance of the resin pulley by increasing flexibility and toughness of the phenolic resin as the base resin and the inorganic powder having a function of maintaining dimensional stability of the resin pulley, thereby reducing the content ratio of the inorganic fiber to prevent a reduction in abrasion resistance and suppress belt attacking property due to the excessive inorganic fiber, and
(b) the resin composition is further comprising the polyester acrylate serving as a compatibilizer of the phenolic resin and NBR and acting to micro-disperse NBR into the phenolic resin when the resin composition is produced by heating the aforesaid components, mixing the components in a state where the resin component (the phenoic resin and NBR) is fused and crushing the mixture if necessary.

Therefore, even if the resin pulley is used as a pulley for engine parts for automobiles and the like to which severe thermal shock is given repeatedly, thermal shock resistance can be maintained and generation of cracks and the like can be prevented reliably. Consequently, according to the present invention, a resin pulley can be provided which is superior, in particular, in abrasion resistance in a dusty atmosphere and superior in thermal shock resistance and also has suppressed belt attacking property.

A content ratio of the polyester acrylate is preferably 0.1 to 3.0 mass % relative to a content ratio of the phenolic resin.

The resin composition forming the resin pulley of the present invention preferably includes 10 to 20 mass % of an organic filler. As NBR, it is preferable to use NBR whose content ratio of acrylonitrile is 30 % or more. A content ratio of NBR in the resin composition is preferably 20 mass % or less. The resin pulley of the present invention is preferably formed by molding the resin composition with the use of a film gate type mold. The resin pulley is preferably used for an engine part for automobiles.

The resin composition of the present invention is characterized by containing 35 to 55 mass % of a phenolic resin as a base resin, 1 mass % or more of an acrylonitrile butadiene rubber, 10 to 25 mass % of an inorganic fiber and 3 to 15 mass % of an inorganic powder, and further comprising a polyester acrylate, wherein the polyester acrylate is at least one kind selected from a group of components represented by formulas (1) and (2): 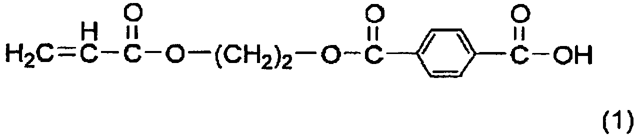 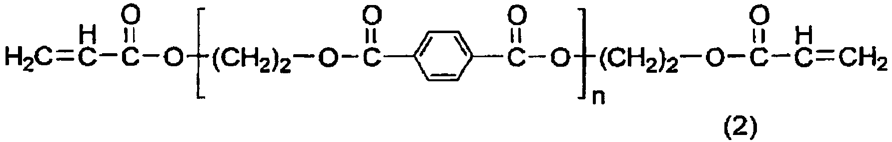 where n is 1 to 10.

A resin pulley having excellent properties can be produced by employing the resin composition of the present invention, as described above. The resin composition is preferably produced by blending the phenolic resin in which the polyester acrylate is dissolved previously, and the other components and then kneading the mixture in a State where the resin component is fused.

### Effects of the Invention

According to the present invention, a resin pulley which is superior, in particular, in abrasion resistance in a dusty atmosphere and the like and superior in thermal shock resistance and also has suppressed belt attacking property, and a resin composition for forming the resin pulley can be provided.

### BRIEF DESCRIPTION OF THE DRAWING

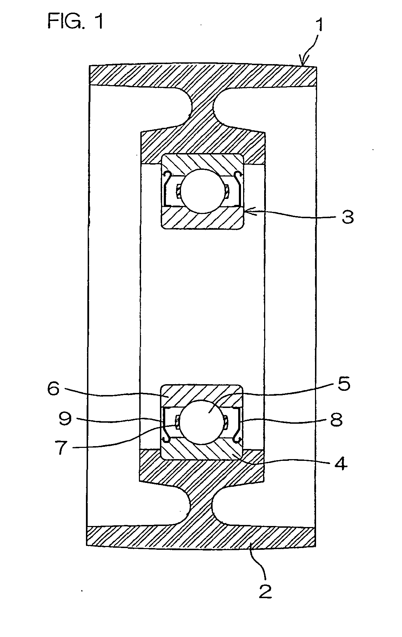

FIG. 1 is a sectional view of an example of resin pulleys according to the present invention produced in examples and comparative examples.

### Description of the Symbols

1 Resin pulley
2 Pulley body

### DETAILED DESCRIPTION OF THE PREFERRED EMBODIMENT

A resin composition for a resin pulley of the present invention is characterized by containing 35 to 55 mass % of a phenolic resin as a base resin, 1 mass % or more of NBR, 10 to 25 mass % of an inorganic fiber and 3 to 15 mass % of an inorganic powder, and further comprising a polyester acrylate, wherein the polyester acrylate is at least one kind selected from a group of compounds represented by formulas (1) and (2): 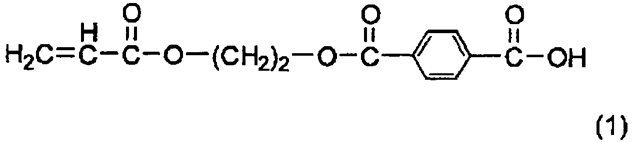 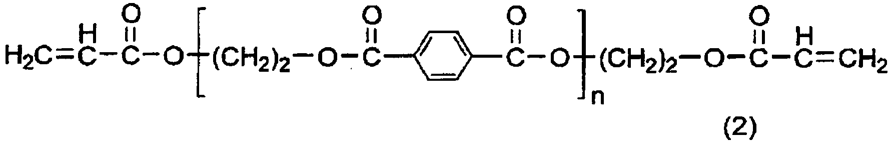 where n is 1 to 10.

A resin pulley of the present invention is characterized by being formed by the resin composition. The resin composition of the present invention is preferably produced by blending the phenolic resin in which the above polyester acrylate is melted and mixed previously, and the other components in a state where the resin component is fused. In view of producing the resin pulley by injection molding and the like, the phenolic resin is preferably a novolac-type phenolic resin or a resol-type phenolic resin, both of which are solid at ordinary temperatures. In particular, when the resin pulley is provided with an insertion member made of metal and the like, a resol-type phenolic resin is preferable which is superior in thermal shock resistance and dimensional stability.

When the novolac-type phenolic resin is used, it is preferable to blend a hardening agent such as hexamethylenetetramine at a content ratio of 12 to 20 mass % relative to the phenolic resin. When the resol-type phenolic resin is used, it is preferable to blend an auxiliary hardening agent such as calcium hydroxide at a content ratio of 5 to 12 mass % relative to the phenolic resin. Since phenolic resins adjust flowability of the resin composition at a preferred range when producing the resin pulley by injection molding and the like, their number average molecular weight is preferably 600 to 1,100 regardless of the types of resins. In a resin composition employing a phenolic resin having a number average molecular weight of less than 600, its viscosity during heating and melting is too small to obtain sufficient resin pressure at injection molding, whereby a good resin pulley may not be molded.

In a resin composition using a phenolic resin having a number average molecular weight exceeding 1,100, sufficient flowability cannot be obtained during heating and melting. Therefore, a good resin pulley may not be molded. The number average molecular weight of the phenolic resin can be selected so as to be an optimum range even within the foregoing range to obtain optimum flowability, for example, depending on the shape and the structure of a mold used for molding. When a resin pulley is molded by using a film gate type mold, for example, a number average molecular weight of the phenolic resin is preferably 700 to 900 even within the aforesaid range.

A reason why the content ratio of the phenolic resin is limited to 35 to 55 mass % relative to a total amount of the resin composition in the present invention is that when the content ratio of the phenolic resin is less than the above range, there is a problem that production of the resin composition becomes difficult since flowability is reduced or cannot easily be adjusted when heating each of the above components, mixing them in a state where the resin component is melted and crushing the mixture if necessary. Furthermore, flowability when heating and melting the produced resin composition is reduced or cannot easily be adjusted. As a result, there is also a problem that when the resin composition is filled into a mold cavity provided in a mold and corresponding to a shape of the resin pulley to produce the resin pulley by injection molding and the like, followability toward the surface of the mold cavity and moldability are reduced.

When the content ratio of the phenolic resin exceeds the aforesaid range, the content ratio of other components relatively becomes small. As a result, there is a problem that, in particular, abrasion resistance in a dusty atmosphere and thermal shock resistance of the resin pulley are reduced. In view of further improving the effect to prevent the problems mentioned above from being caused and producing a resin pulley having excellent properties, the content ratio of the phenolic resin is preferably 40 to 55 mass %, and particularly preferably 45 to 50 mass % even within the aforesaid range.

Various types of NBR in which acrylonitrile and butadiene are copolymerized and which is classified based on a content ratio of acrylonitrile are available, and in particular, NBR classified as medium nitrile NBR to extremely high nitrile NBR, whose content ratio of acrylonitirile is 30 % or more, is preferable. Since, in NBR having an acrylonitrile content ratio of 30 % or more, its solubility parameter (SP value) is close to the SP value of the phenolic resin, such NBR is superior in its compatibility with the phenolic resin. Accordingly, the effect of improving thermal shock resistance of the resin pulley by functioning polyester acrylate as a compatibilizer and micro-dispersing NBR into the phenolic resin can be further increased when each of the foregoing components is heated, mixed in a state where the resin component is melted, and crushed the mixture if necessary, to produce the resin composition.

The content ratio of NBR is limited to 1 mass % or more relative to a total amount of the resin composition in the present invention, because if the content ratio is less than the aforesaid range, an effect by NBR of improving thermal shock resistance of the resin pulley cannot be obtained. The content ratio of NBR is preferably 20 mass % or less, and more preferably 10 mass % or less, even within the range. This is because there is a possibility that the effect by the addition cannot be further obtained even if the ratio exceeds 10 mass % and excessive NBR may be wasted.

Furthermore, when the content ratio exceeds 20 mass %, the content ratio of other components becomes relatively small, thereby reducing, in particular, abrasion resistance of the resin pulley in a dusty atmosphere, causing instability of properties of the resin pulley, and reducing moldability in production of the resin pulley by injection molding or the like due to a decrease in flowability of the resin composition during heating and melting. In view of further improving the effect to prevent the foregoing problems from being caused and producing a resin pulley having excellent properties, the content ratio of NBR is preferably 3 to 8 mass %, and more preferably 4 to 6 mass %, even within the range.

An inorganic fiber includes a glass fiber, a boron fiber, a carbon fiber, a silicon carbide fiber, an alumina fiber, an inorganic whisker, etc. In particular, a glass fiber is preferable due to superiority in reinforcement effect and easy production. Considering that the glass fiber to prevent flowability from being reduced in producing the resin composition by heating the aforesaid components, mixing them in a state where the resin component is melted and crushing the mixture if necessary, and prevents moldability from being decreased in production of the resin pulley by injection molding and the like with the use of the adjusted resin composition, a chopped strand often used to reinforce the phenolic resin having an average fiber diameter of about 6 to 20 µm and an average fiber length of about 1 to 6 mm is preferable.

The content ratio of the inorganic fiber such as a glass fiber is limited to 10 to 25 mass % in the present invention. This is because when the ratio is less than the range, the effect of improving abrasion resistance of the resin pulley by the inorganic fiber cannot be obtained. When the ratio exceeds the range, on the contrary, there is a possibility of reducing abrasion resistance of the resin pulley after all, and increasing belt attacking property as described above. In view of further improving the effect to prevent the problems from being caused and producing a resin pulley having excellent properties, the content ratio of the inorganic fiber is preferably 15 to 25 mass %, and more preferably 20 to 25 mass %, even within the range.

An inorganic powder having various shapes such as a spherical shape, a granular shape, a flaky shape, an indeterminate granular shape, etc., other than a fiber type can be used. The inorganic powder includes, for example, calcium carbonate, silica, clay, mica, wollastonite, zeolite, talc, glass powder, aluminum hydroxide, aluminum oxide, kaolinite, zirconium oxide, magnesium hydroxide, diatomite, etc.

The content ratio of the inorganic powder is limited to 3 to 15 mass % in the present invention. This is because when the ratio is less than the range, the effect of maintaining dimensional stability of the resin pulley by the inorganic powder cannot be achieved. When the ratio exceeds the range, the excessive inorganic powder becomes dropping off factors similar to the inorganic fiber, thereby reducing abrasion resistance of the resin pulley. Considering further improving an effect to prevent the problems from being caused and producing a resin pulley having excellent properties, the content ratio of the inorganic powder is pref erably 3 to 10mass %, and more pref erably 5 to 8 mass %, even within the range.

As a polyester acrylate, at least one kind selected from a group of chemical compounds shown in formulas (1) or (2) is used: 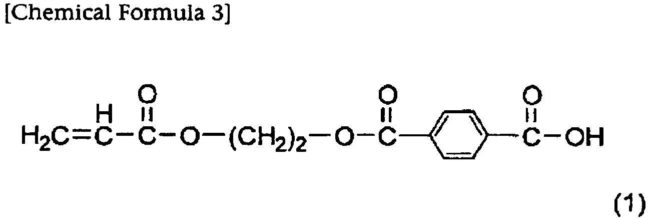 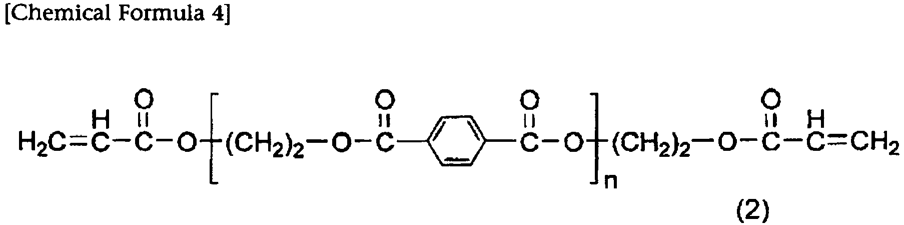 where n is 1 to 10.

A content ratio of polyester acrylate is preferably 0.1 to 3.0 mass % relative to the content ratio of the phenolic resin. When the content ratio of polyester acrylate is less than the range, the above function as a compatibilizer by adding the polyester acrylate cannot be obtained sufficiently. When the amount exceeds the range, the excessive polyester acrylate can reduce, in particular, abrasion resistance in a dusty atmosphere and thermal shock resistance of the resin pulley.

The resin composition forming the resin pulley of the present invention may contain an organic filler. The organic filler includes, for example, wood flour, pulp, a cloth chip, a polyvinyl alcohol fiber, etc. The organic filler reinforces the strength of the resin pulley. The content ratio of the organic filler is preferably 10 to 20 mass %. When the content ratio of the organic filler is less than the above range, the addition effect may not be obtained sufficiently.

On the other hand, when the content ratio exceeds the above range, melted phenolic resin is incorporated into the organic filler when producing the resin composition by heating the foregoing components, mixing them in a state where the resin component is melted, and crushing the mixture if necessary. As a result, an apparent amount of the resin component is decreased. Accordingly, there is a possibility that flowability is reduced or adjustment of flowability becomes difficult, and thus production of the resin composition may become difficult. In view of further improving an effect to prevent the above problems from being caused and producing a resin pulley having excellent properties, the content ratio of the organic filler is preferably 10 to 15 mass %, and more preferably 10 to 13 mass %, even within the range.

Besides the aforesaid components, the resin composition can be added with various additives within a well-known content ratio, such as a lubricant like fluororesin powder for providing the surface of the resin pulley with a slipping property and contributing to the improvement of abrasion resistance, a coupling agent like a silane coupling agent for processing the surface of an inorganic component like the inorganic fiber, the inorganic powder, etc. and increasing affinity toward the organic component like the phenolic resin, NBR, etc. a coloring agent like carbon black, and a mold releasing agent like zinc stearate for facilitating release of the resin pulley from a mold after molding.

The resin pulley of the present invention can be produced by so-called injection molding in the following manner. The resin composition is produced by heating the above-mentioned components, mixing them in a state where the resin component is melted and crushing the mixture if necessary. The produced resin composition is heated and fused in a cylinder of an injection moldingmachine, and injected into a mold cavity which is provided in a mold preheated to not less than a hardening temperature of the phenolic resin and corresponds to a shape of the pulley. Thereafter hardening-reacting of the phenolic resin is performed to produce the resin pulley. When the resin pulley is provided with a metal insertion member, the resin pulley integrated with the insertion member can be produced in the same manner by injecting the resin composition into the mold cavity and hardening-reacted while the insertion member is held in a holding portion for the insertion member provided within the mold cavity.

The mold used for molding is preferably a so-called film gate type mold, that is, a mold where a film gate extending over the entire circumference of the resin pulley is formed for injecting the resin composition into the mold cavity. When the film gate type mold is used, a reinforcing fiber is dispersed over the entire circumference of the resin pulley as uniformly as possible, thereby being capable of improving the entire strength of the resin pulley to be produced, as compared with, for example, the case when a mold with a pinpoint type gate is used.

The resin pulley of the present invention can be produced also by various molding methods applicable to molding of a resin composition including a curable resin, such as transfer molding and compression molding. Since the resin pulley of the present invention is formed by the resin composition containing the above-mentioned components, in particular, abrasion resistance in a dusty atmosphere and thermal shock resistance are superior and belt attacking property is suppressed. As a result, the resin pulley hassufficiently practicable properties as an alternative product of a metal pulley, and can be preferably used, in particular, as an engine part for automobiles.

### Examples

### <Examples 1 to 7 and comparative examples 1 to 6>

Components shown in Tables 1 and 2 were blended by a Henschel mixer, mixed and sheeted by a heat roll heated at 85°C, and then crushed to produce a resin composition. Details of the components are as follows. In Tables 1 and 2, the value on the upper side in the row of a polyester acrylate represents a content ratio of the polyester acrylate relative to a total amount of the resin composition. The value in parentheses on the lower side represents a content ratio of polyester acrylate relative to a content ratio of phenolic resins.

### (Phenolic resins)

Resol-type phenolic resin: HP-190R produced by Hitachi Chemical Co., Ltd. (number average molecular weight of 850)
Novolac-type phenolic resin: HP-700NK produced by Hitachi Chemical Co., Ltd. (number average molecular weight of 800)

### (Polyester acrylate)

ARONIX (registered trademark) M-8030 produced by Toagosei Co., Ltd. [represented by formula (2) where n is 3]

### (Hardening agent)

Hexamethylenetetramine

### (NBR)

PNC-38produced by JSR Corporation (acrylonitrile content of 40 %)

### (Glass fiber)

RES015 produced by Nippon Sheet Glass Co., Ltd. [chopped strands having an average fiber diameter of 13 µm and an average fiber length of 1.5 mm]

### (Inorganic powder)

Zeolite

### (Organic filler)

Pulp

### (Auxiliary hardening agent)

Calcium hydroxide

### (Mold releasing agent)

Zinc stearate

### (Coloring agent)

Carbon black

A film gate type mold was prepared which was provided with a mold cavity corresponding to a shape of a pulley body 2 of a resin pulley 1 shown in FIG. 1, a holding portion holding an outer ring 4 of a ball bearing 3 in a position of the mold cavity corresponding to a central position of the pulley body 2, and a film gate extending over the entire circumference of the resin pulley 1. While the mold was set to an injection molding machine and heated to 170°C, the above resin composition was supplied to a hopper of the injection molding machine. The ball bearing 3 including the outer ring 4, a ball 5, an inner ring 6, a cage 7 and seals 8 and 9 were set to the holding portion of the mold and clamped. In this state, the resin composition softened within a cylinder was injected into the mold cavity via the film gate, filled, and hardened, thereby molding the pulley body 2 and producing the resin pulley 1.

### (Thermal shock resistance test)

A process of cooling the resin pulleys produced in examples and comparative examples at -40°C for 30 minutes and then heating them at 140°C for 30 minutes was regarded as one cycle, and the process was repeated for 2,000 cycles. After that, whether a crack was generated in the pulley body 11 was observed. Pulley bodies without any cracks were evaluated as having good thermal shock resistance (Good), and pulley bodies with even a few cracks were evaluated as having poor thermal shock resistance (Poor) .

### (Abrasion resistance and belt attacking property tests)

While a rubber belt was extended between a metal pulley and the resin pulley produced in each of examples and comparative examples, the resin pulley was continuously rotated for 24 hours in a dusty atmosphere at the dust amount of 2 kg/m³ and the flow rate of 1 m/s on condition of the rotation frequency of 9,000 min⁻¹. Abrasion thickness (mm) of the outer circumferential surface of the pulley body 11 around which the belt was wound was measured after the continuous rotation, and abrasion resistance was evaluated. At the same time, damage degree of the surface of the belt wounded around the resin pulley was also observed. A case where a belt was without any damage was evaluated as having no belt attacking property (Good), and a case where a belt was even with a slight damage was evaluated as having belt attacking property (Poor). A target value of the abrasion thickness was 0.15 mm or less. Results are shown in Tables 1 and 2.
[Table 1]

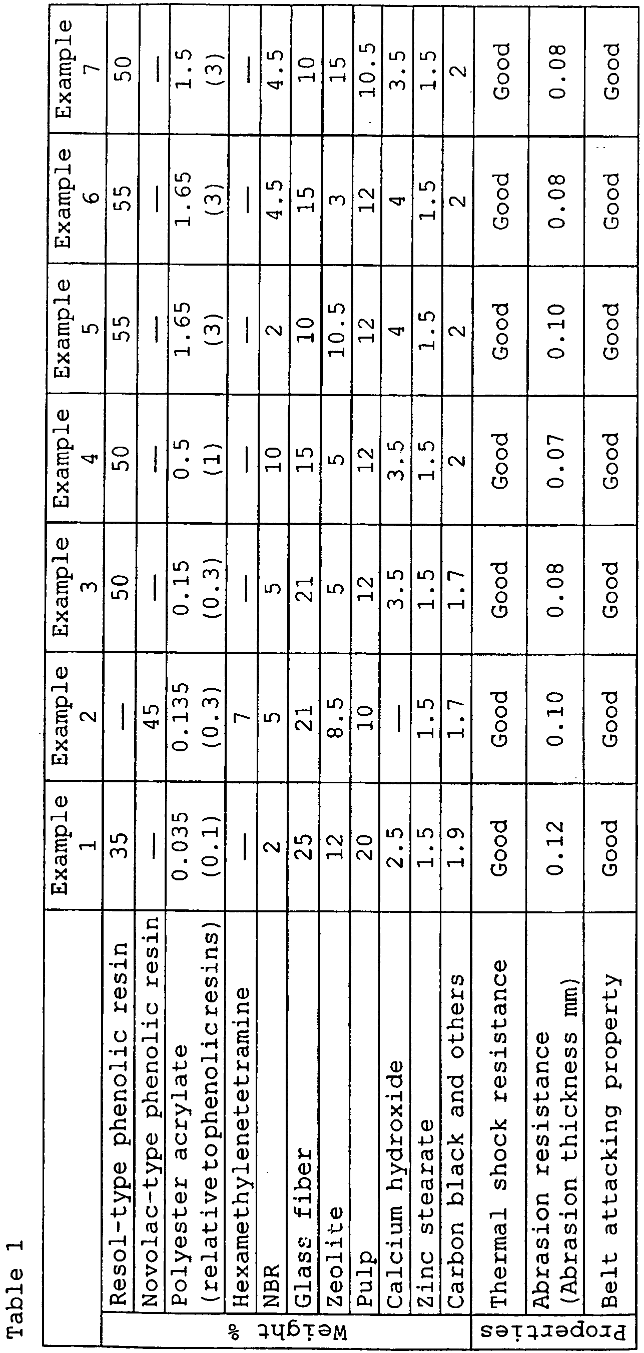

[Table 2]

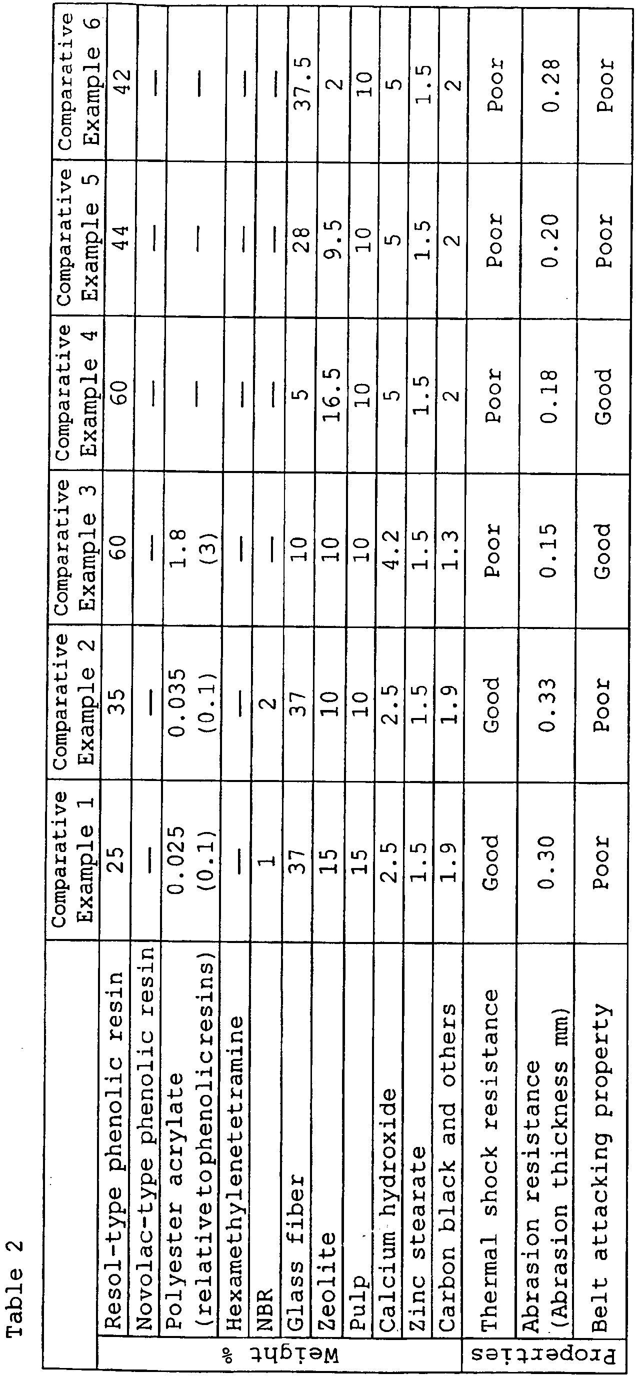

It became clear from Tables 1 and 2 that Comparative Example 1 whose content ratio of the phenolic resins was lower than 35 mass % and whose content ratio of the glass fiber exceeded 25 mass %, and Comparative Example 2 whose content ratio of the glass fiber exceeded 25 mass % were both superior in thermal shock resistance but were insufficient in abrasion resistance and had belt attacking property. It was found that Comparative Example 3 whose content ratio of the phenolic resins exceeded 55 mass % and which did not contain NBR was superior in abrasion resistance and had no belt attacking property but was insufficient in thermal shock resistance. It was found that Comparative Example 4 whose content ratio of the phenolic resins exceeded 55 mass % and whose content ratio of zeolite as inorganic powder exceeded 15 mass % and which did not contain NBR had no belt attacking property but was insufficient in thermal shock resistance and slightly low in abrasion resistance.

It was found that Comparative Example 5 which did not include NBR and whose content ratio of the glass fiber exceeded 25 mass %, and Comparative Example 6 which did not contain NBR and whose content ratio of the glass fiber exceeded 25 mass % and whose content ratio of zeolite was less than 3 mass % were both insufficient in thermal shock resistance and abrasion resistance and further had belt attacking property. On the contrary, it was confirmed that each example had superior thermal shock resistance and abrasion resistance and had no belt attacking property, since each of the foregoing components in each example was within the range defined in the present invention.

## Claims

1. A resin pulley formed by a resin composition comprising 35 to 55 mass % of a phenolic resin as a base resin, 1 mass % or more of an acrylonitrile butadiene rubber, 10 to 25 mass % of an inorganic fiber and 3 to 15 mass % of an inorganic powder, the resin composition further comprising a polyester acrylate, wherein the polyester acrylate is at least one kind selected from a group of compounds represented by formulas (1) and (2): 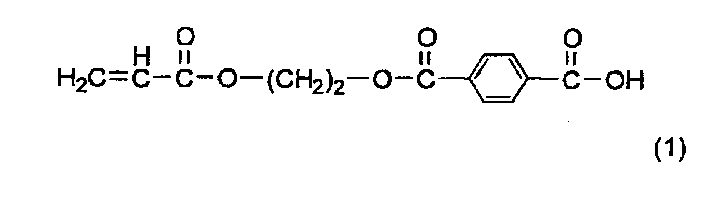 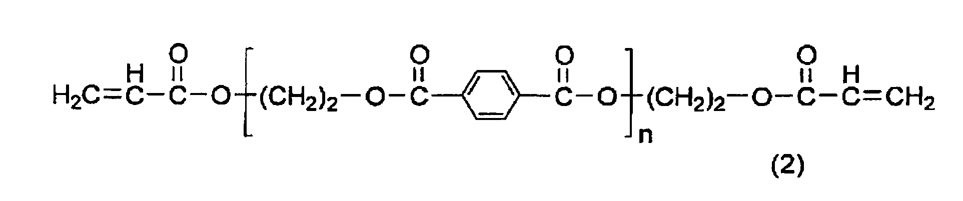 where n is 1 to 10.

2. The resin pulley according to claim 1, wherein a content ratio of the polyester acrylate is 0.1 to 3.0 mass % relative to a content ratio of the phenolic resin.

3. The resin pulley according to claim 1, wherein the resin composition contains 10 to 20 mass % of an organic filler.

4. The resin pulley according to claim 1, wherein the acrylonitrile butadiene rubber contains 30 % or more of acrylonitrile.

5. The resin pulley according to claim 1, wherein a content ratio of the acrylonitrile butadiene rubber is 20 mass % or less.

6. The resin pulley according to claim 1, formed by molding the resin composition with the use of a film gate type mold.

7. Use of a resin pulley according to claim 1, for an engine part for automobiles.

8. A resin composition for a resin pulley comprising 35 to 55 mass % of a phenolic resin as a base resin, 1 mass % or more of an acrylonitrile butadiene rubber, 10 to 25 mass % of an inorganic fiber and 3 to 15 mass % of an inorganic powder, and further comprising a polyester acrylate, wherein the polyester acrylate is at least one kind selected from a group of compounds represented by formulas (1) and (2): 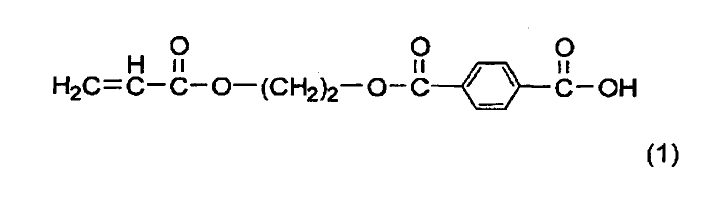 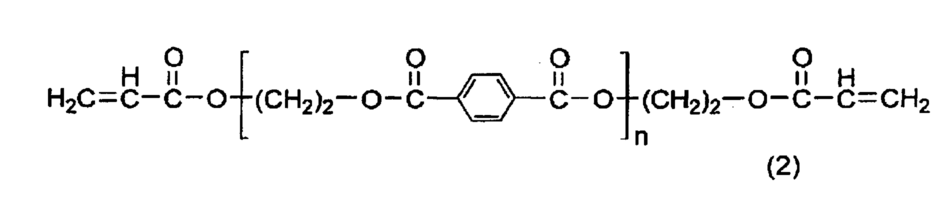 where n is 1 to 10.

9. The resin composition according to claim 8, produced by blending the phenolic resin in which the polyester acrylate is dissolved previously, and the other components and then kneading the mixture in a state where the resin component is fused.

## Patentansprüche

1. Harzscheibe, die aus einer Harzzusammensetzung gebildet ist, die 35 bis 55 Massen-% eines phenolischen Harzes als ein Grundharz, 1 Massen-% oder mehr eines Acrylnitrilbutadienkautschuks, 10 bis 25 Massen-% einer anorganischen Faser und 3 bis 15 Massen-% eines anorganischen Pulvers umfasst, worin die Harzzusammensetzung ferner ein Polyesteracrylat umfasst, worin das Polyesteracrylat mindestens einer Art ist, die ausgewählt ist aus einer Gruppe von Verbindungen, die durch die Formeln (1) und (2) dargestellt sind: 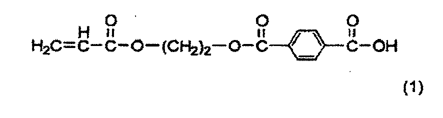 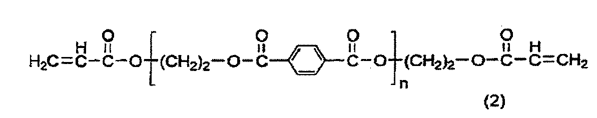 worin n 1 bis 10 ist.

2. Harzscheibe nach Anspruch 1, worin ein Gehaltsanteil des Polyesteracrylats 0,1 bis 3,0 Massen-% relativ zu einem Gehaltsanteil des phenolischen Harzes beträgt.

3. Harzscheibe nach Anspruch 1, worin die Harzzusammensetzung 10 bis 20 Massen-% eines organischen Füllstoffes enthält.

4. Harzscheibe nach Anspruch 1, worin der Acrylnitrilbutadienkautschuk 30 % oder mehr Acrylnitril enthält.

5. Harzscheibe nach Anspruch 1, worin ein Gehaltsanteil des Acrylnitrilbutadienkautschuks 20 Massen-% oder weniger beträgt.

6. Harzscheibe nach Anspruch 1, die durch Formen der Harzzusammensetzung unter der Verwendung einer Form vom Filmangusstyp gebildet ist.

7. Verwendung einer Harzscheibe nach Anspruch 1, für ein Motorenteil für Kraftfahrzeuge.

8. Harzzusammensetzung für eine Harzscheibe, die 35 bis 55 Massen-% eines phenolischen Harzes als ein Grundharz, 1 Massen-% oder mehr eines Acrylnitrilbutadienkautschuks, 10 bis 25 Massen-% einer anorganischen Faser und 3 bis 15 Massen-% eines anorganischen Pulvers umfasst, und die ferner ein Polyesteracrylat umfasst, worin das Polyesteracrylat mindestens einer Art ist, die aus einer Gruppe von Verbindungen ausgewählt ist, die durch die Formeln (1) und (2) dargestellt sind: 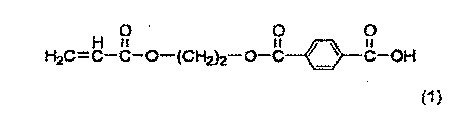 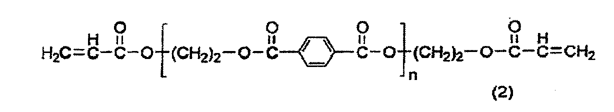 worin n 1 bis 10 ist.

9. Harzzusammensetzung nach Anspruch 8, die durch Mischen des phenolischen Harzes, in dem das Polyesteracrylat zuvor gelöst wurde, und der anderen Komponenten hergestellt ist und anschließendes Kneten der Mischung in einem Zustand, worin die Harzkomponente geschmolzen vorliegt.

## Revendications

1. Poulie en résine formée par une composition de résine comprenant 35 à 55 % en masse d'une résine phénolique en tant que résine de base, 1 % en masse ou plus d'un caoutchouc d'acrylonitrile-butadiène, 10 à 25 % en masse d'une fibre inorganique et 3 à 15 % en masse d'une poudre inorganique, la composition de résine comprenant également un acrylate de polyester, l'acrylate de polyester étant au moins un type choisi dans un groupe de composés représentés par les formules (1) et (2) : 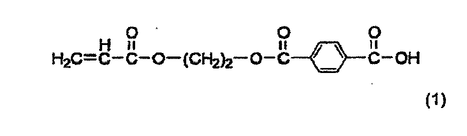 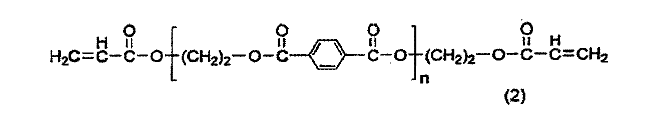 dans lesquelles n vaut 1 à 10.

2. Poulie en résine selon la revendication 1, dans laquelle un taux d'acrylate de polyester est de 0,1 à 3,0 % en masse par rapport à un taux de la résine phénolique.

3. Poulie en résine selon la revendication 1, dans laquelle la composition de résine contient 10 à 20 % en masse d'une charge organique.

4. Poulie en résine selon la revendication 1, dans laquelle le caoutchouc d'acrylonitrile-butadiène contient 30 % ou plus d'acrylonitrile.

5. Poulie en résine selon la revendication 1, dans laquelle un taux du caoutchouc d'acrylonitrile-butadiène est de 20 % en masse ou moins.

6. Poulie en résine selon la revendication 1, formée par moulage de la composition de résine en utilisant un moule de type à entrée en voile.

7. Utilisation d'une poulie en résine selon la revendication 1 pour une partie de moteur pour automobiles.

8. Composition de résine pour une poulie en résine, comprenant 35 à 55 % en masse d'une résine phénolique en tant que résine de base, 1 % en masse ou plus d'un caoutchouc d'acrylonitrile-butadiène, 10 à 25 % en masse d'une fibre inorganique et 3 à 15 % en masse d'une poudre inorganique, et comprenant également un acrylate de polyester, l'acrylate de polyester étant au moins un type choisi dans un groupe de composés représentés par les formules (1) et (2) : 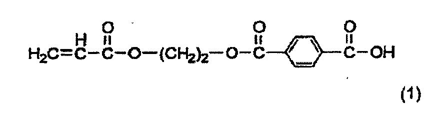 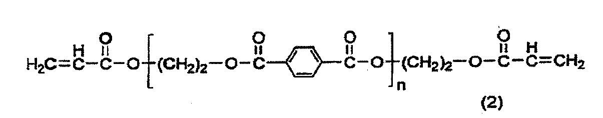 dans lesquelles n vaut 1 à 10.

9. Composition de résine selon la revendication 8, produite par mélange de la résine phénolique dans laquelle l'acrylate de polyester a été dissous auparavant, et des autres composants, puis malaxage du mélange à un état où le composant résine est fusionné.
